# EUROPÄISCHE PATENTSCHRIFT

(11) **EP 1 034 406 B1**
(45) Veröffentlichungstag und Bekanntmachung des Hinweises auf die Patenterteilung: **21.11.2001**
(21) Anmeldenummer: 98934797.6
(22) Anmeldetag: 26.05.1998
(51) Int. Cl.: F24J 2/52, H01L 31/042

(54) **BEFESTIGUNG FÜR SOLARMODULE**
FIXING DEVICE FOR SOLAR MODULES
DISPOSITIF DE FIXATION POUR MODULES SOLAIRES

(30) Priorität: 30.09.1997 DE 29717449 U
(43) Veröffentlichungstag der Anmeldung: 13.09.2000
(73) Patentinhaber: Wismeth, Wolfgang, 90765 Fürth (DE)
(72) Erfinder: Wismeth, Wolfgang, 90765 Fürth (DE)
(74) Vertreter: Rauh, Helga
(86) Internationale Anmeldenummer: DE9801436
(87) Internationale Veröffentlichungsnummer: WO9917063

(56) Entgegenhaltungen:
- DE-A- 3 035 841
- DE-U- 9 204 018
- DE-U- 29 717 449
- NL-A- 8 304 155

## Beschreibung

Die Erfindung betrifft eine Befestigung für Solarmodule mit den Merkmalen des Oberbegriffs des Anspruchs 1.

Es ist bekannt, Solarmodule mittels Aufnahmeteilen, wie Profilschienen, an ihrem vorgesehenen Einsatzort zu befestigen.
Die Profilschienen sind an ihrer Unterseite mit einem durchgehenden Schlitz versehen, um sie variabel am Einsatzort festschrauben zu können und weisen an ihrer Oberseite mehrere Ausnehmungen auf, in denen die Solarmodule mit ihrem Rahmen verschraubt werden. Die Montage der Solarmodule ist dadurch relativ zeitaufwendig. Aus der DE-U-92 04 018 ist eine derartige Befestigung für Solarmodule bekannt, die aus einem Aufnahmeteil für die Befestigung eines Solarmoduls an diesem Aufnahmeteil besteht, wobei das Aufnahmeteil an seiner dem Solarmodul zugewandten Oberseite Ausnehmungen aufweist. Aufgabe der vorliegenden Erfindung ist es daher, eine Befestigung für Solarmodule zu schaffen, mittels der diese schnell und daher auch preisgünstig montiert werden können.

Diese Aufgabe wird mit den im kennzeichnenden Teil des Anspruchs 1 genannten Merkmalen gelöst. Fortbildungen und vorteilhafte Ausführungen der Erfindung sind in den weiteren Ansprüchen umfaßt.

Erfindungsgemäß ist eine Befestigung für Solarmodule, bestehend aus wenigstens einem Aufnahmeteil für die Befestigung am Einsatzort und Befestigungsmitteln für die Befestigung von Solarmodulen an diesem Aufnahmeteil, wobei das Aufnahmeteil an seiner dem Solarmodul zugewandten Oberseite mit wenigstens einer Ausnehmung versehen ist, dadurch gekennzeichnet, daß die Befestigungsmittel Vorsprünge, Stifte oder Haken sind, die mit dem Solarmodul verbunden oder an diesem angeformt sind und die im zusammengesteckten Zustand von Aufnahmeteil und Solarmodul die Ausnehmung seitlich und/oder an ihren Enden untergreifen.

Vorzugsweise ist das Aufnahmeteil eine Profilschiene, die an ihrer dem Solarmodul zugewandten Oberseite mit wenigstens einem parallel zu ihrer Längsachse angeordneten Schlitz versehen ist, wobei die Befestigungsmittel im zusammengesteckten Zustand von Profilschiene und Solarmodul den Schlitz seitlich und/oder an seinen Enden untergreifen. Nach einer Ausführung der Erfindung ist ein Schlitz vorhanden, der sich im wesentlichen über die Gesamtlänge der Profilschiene erstreckt. Nach einer besonderen Ausführung der Erfindung besteht die Profilschiene aus zwei im wesentlichen gleichen Halbprofilen, die wenigstens endseitig durch wenigstens ein Verbindungsstück verbunden sind, das die Halbprofile wenigstens teilweise form- und/oder kraftschlüssig umgreift und derartig parallel zueinander ausrichtet und hält, daß zwischen den Halbprofilen ein Längsschlitz vorhanden ist.

Vorzugsweise sind die Befestigungsmittel Laschen aus einem federnden Material mit abgewinkelten Zungen.

Nach einer bevorzugten Ausführung der Erfindung weisen die Solarmodule Rahmenteile auf, die Ausnehmungen aufweisen, die zu dem Aufnahmeteil hin ausgerichtet sind, wobei die Befestigungsmittel Vorsprünge, Stifte, Haken oder dergleichen sind, die im zusammengesteckten Zustand von Aufnahmeteil und Solarmodul die Ausnehmung im Rahmenteil seitlich und/oder an ihren Enden untergreifen. Vorzugsweise sind auch hier die Befestigungsmittel Laschen aus einem federnden Material mit nach abgewinkelten Zungen. Nach einer bevorzugten Ausführung der Erfindung sind die Befestigungsmittel zweiseitig wirkende Clips sind, bei denen sich von einem Quersteg aus nach oben und unten jeweils ein Längssteg erstreckt, an deren Enden V-förmig zum Quersteg hinweisende Klemmblätter aus einem federnden Material angeordnet sind, die in einem Abstand über dem Quersteg enden, der im wesentlichen der Stärke seitlicher Stege der Ausnehmungen des Aufnahmeteils oder des Rahmenteils entspricht, wobei die Klemmblätter die Stege der Ausnehmungen von Aufnahmeteil und Rahmenteil im zusammengesteckten Zustand hintergreifen und beide miteinander verbinden. Vorzugsweise weist hierbei der Quersteg neben den Längsstegen Erhebungen auf, die im wesentlichen der Weite der Ausnehmungen des Aufnahmeteils oder des Rahmenteils zwischen den Stegen entsprechen und diese im zusammengesteckten Zustand von Aufnahmeteil und Rahmenteil ausfüllen.

Das federnde Material für die Befestigungsmittel kann ein Metall- oder eine Metalllegierung, oder aber auch ein Kunststoff sein.

Die Befestigungsmittel können alternativ aus einem Elastomer bestehen.

Vorteilhafterweise kann das Aufnahmeteil oder das Rahmenteil seitliche Ausnehmungen zur Demontage der Befestigungsmittel aufweisen.

Im folgenden wird die Erfindung anhand von Zeichnungen beispielhaft näher beschrieben. Dabei zeigen:
Fig. 1 eine erste Ausführung einer Befestigung für Solarmodule;
Fig. 2 Befestigungsmittel einer zweiten Ausführung einer Befestigung für Solarmodule in auseinandergebautem Zustand von Aufnahmeteil und Rahmenteil im Schnitt;
Fig. 3 die Befestigungsmittel von Fig. 2 mit Aufnahmeteil und Rahmenteil im zusammengesteckten Zustand.

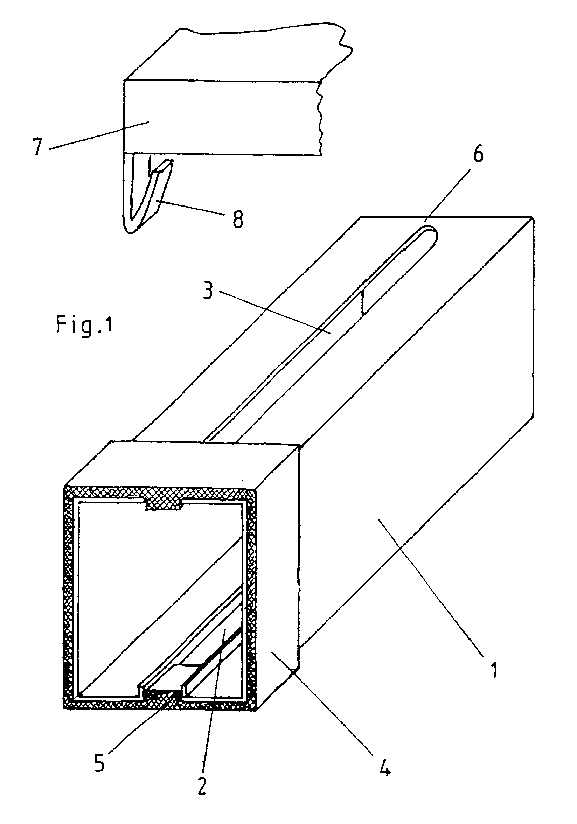

Die erfindungsgemäße Befestigung für Solarmodule gemäß Fig. 1 besteht aus einer Profilschiene 1 mit einem unteren Befestigungsschlitz 2 und einem oberen Schlitz 3, in den ein unterhalb des Rahmens 7 eines Solarmoduls angeordneter Befestigungshaken 8 mit einer federnden Zunge einsteckbar ist, wobei die federnde Zunge sich im zusammengesteckten Zustand von Solarmodul und Profilschiene seitlich neben dem Schlitz unter die Profilschiene klemmt. Der Befestigungsschlitz, mittels dem die Profilschiene in bekannter Weise am Einsatzort befestigt wird erstreckt sich über die gesamte Länge der Profilschiene. Diese muß daher wenigstens endseitig Verbindungsstege 6 aufweisen, wie hier im oberen Bereich der Zeichnung gezeigt. Alternativ kann die Profilschiene 1 aus zwei separaten Halbschienen bestehen, die durch ein oder mehrere Verbindungsstücke 4 zusammengehalten werden. Das hier im unteren Bereich der Zeichnung gezeigte Verbindungsstück 4 ist rahmenförmig ausgebildet und besitzt einen rechteckigen Querschnitt. Es umfaßt die zwei Halbschienen formschlüssig und weist zwei gleich große Abstandshalter 5, von denen einer in den unteren Befestigungsschlitz 2 und der andere in den oberen Schlitz 3 greift, auf, so daß die beiden Halbschienen zwischen sich beide Schlitze bilden und parallel zueinander ausgerichtet gehalten werden. Vorzugsweise befinden sich solche Verbindungsstücke 4 an beiden Enden einer Profilschiene. Der Einsatz solcher Verbindungsstücke hat sowohl den Vorteil, daß die Halbschienen stets im erwünschten Maß abgelängt werden können und daß die Demontage leichter erfolgen kann, indem ein Verbindungsstück abgezogen wird und das Solarmodul mit seinen Befestigungsmittel einfach entlang der Profilschiene herausgezogen werden kann. Bei dieser Ausführung ist es auch nicht erforderlich, die Zunge des Befestigungshakens 8 federnd auszubilden, da das Solarmodul in gleicher Weise auch auf die Profilschiene aufgeschoben werden kann. Bei endseitigen Stegen kann die Demontage nur durch Zusammendrücken der federnden Zunge erfolgen, wozu ein Werkzeug benötigt wird.

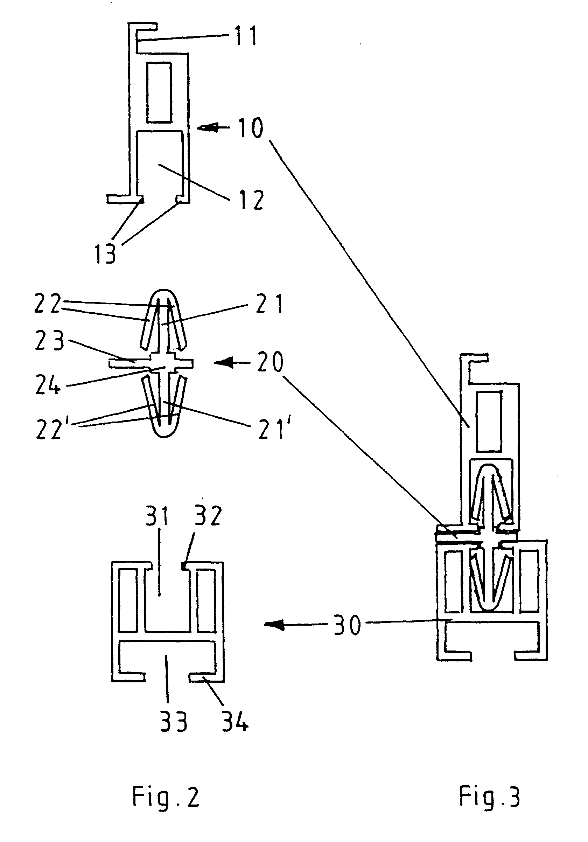

Fig. 2 und 3 zeigen ein Aufnahmeteil 30 und ein Rahmenteil 10, die mittels eines Befestigungsmittels 20 zusammengesteckt werden. Das Aufnahmeteil 30 ist eine Profilschiene mit rechteckigen Querschnitt und einer unteren Ausnehmung 33, die seitlich von Stegen 33 übergriffen wird, hinter denen sich Befestigungsmittel wie Schrauben (nicht gezeigt) für die Montage am Einsatzort abstützen können. Das Aufnahmeteil 30 weist weiterhin oben eine weitere Ausnehmung 31 auf, die ebenfalls seitlich von Stegen 32 überragt wird. Das Rahmenteil 10 eines Solarmoduls (nicht gezeigt) ist ebenfalls eine Profilschiene, die im wesentlichen mit rechteckigen Querschnitt ausgeführt, jedoch schmaler als das Aufnahmeteil ist. Sie weist unten eine Ausnehmung 12 auf, die seitlich von Stegen 13 überragt wird und die die gleichen Abmessungen aufweist, wie die obere Ausnehmung 31 des Aufnahmeteils 30. Der in der Zeichnung linke Steg 13 ist über den rechteckigen Querschnitt hinaus nach außen verlängert. Oben weist das Rahmenteil 10 einen zunächst senkrechten und dann horizontal abknickenden Profilabschnitt 11 auf, in dem die Glasplatte des Solarmoduls gehalten wird. Das Befestigungsmittel 20 ist ein beidseitig mit federnden Zungen 22 versehenes Hakenteil, das nur einen Bruchteil der Länge der Profilschienen 10, 20 aufweist und das in einer geeigneten Zahl eingesetzt wird, um die Profilschienen miteinander sicher zu verbinden. Es besitzt einen Quersteg 23, von dem aus sich senkrecht nach unten und oben Längsstege erstrecken, von deren Enden aus sich jeweils auf beiden Seiten federnde Zungen schräg nach außen in Richtung auf den Quersteg erstrecken. Die Länge der Längsstege 21 und der Winkel der Zungen 22 sind so ausgelegt, daß die Zungen beim Zusammenstecken der Profilschienen 10, 20 in die Ausnehmungen 12 und 33 eingeführt und zusammengedrückt werden und dann in den Ausnehmungen 12 und 33 auffedern und sich hinter den Stegen 13 und 34 festspreizen, wie dies in Fig. 3 erkennbar ist. Der Quersteg ist in seiner Mitte zu einem rechteckigen Profil verdickt, dessen Breite etwa der Weite der Öffnungen der Ausnehmung 12 und 33 entspricht, so daß diese im zusammengesteckten Zustand von Profilschienen 10, 30 und Befestigungsmittel 20 im wesentlichen von dem rechteckigen Profil ausgefüllt werden. Der Quersteg 23 des Befestigungsmittels 20 ist nach einer Seite verlängert, so daß er sich über die Breite des Rahmenteils erstreckt, um dem zusammengesteckten Bausatz eine geschlossene Kontur zu verleihen.

## Patentansprüche

1. Befestigung eines Solarmoduls, bestehend aus wenigstens einem Aufnahmeteil für die Befestigung am Einsatzort und Befestigungsmitteln für die Befestigung der Solarmoduls an diesem Aufnahmeteil (1), wobei das Aufnahmeteil (1) an seiner dem Solarmodul zugewandten Oberseite mit wenigstens einer Ausnehmung (3) versehen ist,
**dadurch gekennzeichnet,**
**daß** die Befestigungsmittel Vorsprünge, Stifte oder Haken (8) sind, die mit dem Solarmodul verbunden oder an diesem angeformt sind und die im zusammengesteckten Zustand von Aufnahmeteil und Solarmodul die Ausnehmung seitlich und/oder an ihren Enden untergreifen.

2. Befestigung nach Anspruch 1,
**dadurch gekennzeichnet,**
**daß** das Aufnahmeteil eine Profilschiene (1) ist,
**daß** die Profilschiene (1) an ihrer dem Solarmodul zugewandten Oberseite mit wenigstens einem parallel zu ihrer Längsachse angeordneten Schlitz (3) versehen ist,
seitliche Ausnehmungen zur Demontage der Befestigungsmittel aufweist.

3. Befestigung nach Anspruch 2,
**dadurch gekennzeichnet,**
**daß** ein Schlitz vorhanden ist, der sich im wesentlichen über die Gesamtlänge der Profilschiene erstreckt.

4. Befestigung nach Anspruch 2,
**dadurch gekennzeichnet,**
**daß** die Profilschiene aus zwei im wesentlichen gleichen Halbprofilen besteht, die wenigstens endseitig durch wenigstens ein Verbindungsstück (4) verbunden sind, das die Halbprofile wenigstens teilweise form- und/oder kraftschlüssig umgreift und derartig parallel zueinander ausrichtet und hält, daß zwischen den Halbprofilen ein Längsschlitz vorhanden ist.

5. Befestigung nach Anspruch 1 oder 2,
**dadurch gekennzeichnet,**
**daß** die Befestigungsmittel Laschen aus einem federnden Material mit abgewinkelten Zungen sind.

6. Befestigung nach einem der vorhergehenden Ansprüche,
**dadurch gekennzeichnet,**
**daß** die Solarmodule Rahmenteile (10) aufweisen,
**daß** die Rahmenteile Ausnehmungen (12) aufweisen, die zu dem Aufnahmeteil (30) hin ausgerichtet sind,
und **daß** die Befestigungsmittel Vorsprünge, Stifte, Haken (22) oder dergleichen sind, die im zusammengesteckten Zustand von Aufnahmeteil (30) und Solarmodul die Ausnehmung (12) im Rahmenteil (10) seitlich und/oder an ihren Enden untergreifen.

7. Befestigung nach Anspruch 6,
**dadurch gekennzeichnet,**
**daß** die Befestigungsmittel Laschen (21) aus einem federnden Material mit abgewinkelten Zungen (22) sind.

8. Befestigung nach Anspruch 7,
**dadurch gekennzeichnet,**
**daß** die Befestigungsmittel (20) zweiseitig wirkende Clips sind, bei denen sich von einem Quersteg (23) aus nach oben und unten jeweils ein Längssteg (21) erstreckt, an deren Enden V-förmig zum Quersteg hinweisende Klemmblätter (22) aus einem federnden Material angeordnet sind, die in einem Abstand über dem Quersteg (23) enden, der im wesentlichen der Stärke seitlicher Stege (13, 34) der Ausnehmungen des Aufnahmeteils (30) oder des Rahmenteils (10) entspricht,
wobei die Klemmblätter die seitlichen Stege (13, 33) der Ausnehmungen (12, 33) von Aufnahmeteil und
Rahmenteil im zusammengesteckten Zustand hintergreifen und beide miteinander verbinden.

9. Befestigung nach Anspruch 8,
**dadurch gekennzeichnet,**
**daß** der Quersteg (23) neben den Längsstegen (21) Erhebungen aufweist, die im wesentlichen der Weite der Ausnehmungen (12, 31) des Aufnahmeteils oder des Rahmenteils zwischen den Stegen (13, 34) entsprechen und diese im zusammengesteckten Zustand von Aufnahmeteil und Rahmenteil ausfüllen.

10. Befestigung nach einem der Ansprüche 5 bis 9,
**dadurch gekennzeichnet,**
**daß** das federnde Material ein Metall- oder eine Metalllegierung ist.

11. Befestigung nach einem der Ansprüche 5 bis 9,
**dadurch gekennzeichnet,**
**daß** das federnde Material ein Kunststoff ist.

12. Befestigung nach Anspruch 1 oder 2,
**dadurch gekennzeichnet,**
**daß** die Befestigungsmittel aus einem Elastomer bestehen.

13. Befestigung nach Anspruch 1 oder 2,
**dadurch gekennzeichnet,**
**daß** das Aufnahmeteil oder das Rahmenteil seitliche Ausnehmungen zur Demontage der Befestigungsmittel aufweist.

## Claims

1. A fixing device of a solar module, consisting of at least one holder part for fixing to the site of application and fixing means for fixing the solar module to this holder part (1), the holder part (1) being provided on its upper side directed towards the solar module with at least one recess (3),
**characterised**
**in that** the fixing means are projections, pins or hooks (8) which are connected to the solar module or are moulded thereon and which in the assembled state of the holder part and solar module engage under the recess laterally and/or at the ends thereof.

2. A fixing device according to Claim 1,
**characterised**
**in that** the holder part is a sectional rail (1)
**in that** the sectional rail (1) is provided on its upper side directed towards the solar module with at least one slot (3) arranged parallel to its longitudinal axis, has lateral recesses for the disassembly of the fixing means.¹

3. A fixing device according to Claim 2,
**characterised**
**in that** a slot is provided which extends substantially over the entire length of the sectional rail.

4. A fixing device according to Claim 2,
**characterised**
**in that** the sectional rail consists of two substantially identical half-sections which are connected at least at one end by means of at least one connecting piece (4) which engages around the half-sections at least in part positively and/or non-positively and aligns and holds them parallel to one another in such a way that a longitudinal slot is present between the half-sections.

5. A fixing device according to Claim 1 or 2,
**characterised**
**in that** the fixing means are tabs made of a resilient material with angled tongues.

6. A fixing device according to any one of the preceding Claims,
**characterised**
**in that** the solar modules have frame parts (10),
**in that** the frame parts have recesses (12) which are aligned towards the holder part (30),
and **in that** the fixing means are projections, pins, hooks (22) or the like which in the assembled state of the holder part (30) and solar module engage under the recess (12) in the frame part (10) laterally and/or at the ends thereof.

7. A fixing device according to Claim 6,
**characterised**
**in that** the fixing means are tabs (21) made of a resilient material with angled tongues (22).

8. A fixing device according to Claim 7,
**characterised**
**in that** the fixing means (20) are bilaterally acting clips, wherein respective longitudinal bars (21) extend upwardly and downwardly from a transverse bar (23), at the ends of which are arranged clamping blades (22) directed in a V shape towards the transverse bar and made of a resilient material, which clamping blades end above the transverse bar (23) at a distance which essentially corresponds to the thickness of lateral bars (13, 34) of the recesses of the holder part (30) or of the frame part (10),
wherein the clamping blades engage behind the lateral bars (13, 33 [sic, recte 34]) of the recesses (12, 33) of the holder part and frame part in the assembled state and join them together.

9. A fixing device according to Claim 8,
**characterised**
**in that** the transverse bar (23) has elevations adjacent the longitudinal bars (21) which correspond substantially to the width of the recesses (12, 31) of the holder part or of the frame part between the bars (13, 34) and fill them in the assembled state of the holder part and frame part.

10. A fixing device according to any one of Claims 5 to 9,
**characterised**
**in that** the resilient material is a metal or a metal alloy.

11. A fixing device according to any one of Claims 5 to 9,
**characterised**
**in that** the resilient material is a plastics material.

12. A fixing device according to Claim 1 or 2,
**characterised**
**in that** the fixing means are made of an elastomer.

13. A fixing device according to Claim 1 or 2,
**characterised**
**in that** the holder part or the frame part has lateral recesses for the disassembly of the fixing means.

## Revendications

1. Fixation d'un module solaire, constituée d'au moins un réceptacle pour la fixation au point d'utilisation, et de moyens de fixation, destinés à la fixation du module solaire à ce réceptacle (1), où le réceptacle (1) est, sur sa face supérieure dirigée vers le module solaire, pourvu au moins d'un évidement (3), **caractérisée en ce que** les moyens de fixation sont des saillies, des chevilles ou des crochets (8), qui sont assemblés au module solaire ou sont rapportés à ce dernier, et qui, quand le réceptacle et le module solaire sont assemblés l'un à l'autre, passent en-dessous de l'évidement, latéralement et/ou au niveau de ses extrémités.

2. Fixation selon la revendication 1, **caractérisée en ce que** le réceptacle est un rail profilé (1), tel que le rail profilé (1) soit, sur sa face supérieure en regard du module solaire, pourvu d'au moins une fente (3) disposée parallèlement à son axe longitudinal, le réceptacle comportant des évidements latéraux pour le démontage des moyens de fixation.

3. Fixation selon la revendication 2, **caractérisée en ce qu'**une fente est présente, qui pour l'essentiel s'étend sur toute la longueur du rail profilé.

4. Fixation selon la revendication 2, **caractérisée en ce que** le rail profilé est constitué de deux demi-profilés essentiellement identiques, qui au moins en bout sont reliés par au moins un raccord (4), qui entoure les demi-profilés, au moins partiellement, par une liaison dynamique et/ou à correspondance de forme, et les oriente et les maintient parallèlement l'un à l'autre de telle sorte qu'une fente longitudinale soit présente entre les demi-profilés.

5. Fixation selon la revendication 1 ou 2, **caractérisée en ce que** les moyens de fixation sont des pattes en un matériau élastique, avec languettes coudées.

6. Fixation selon l'une des revendications précédentes, **caractérisée en ce que** les modules solaires comportent des éléments en forme de cadre (10), que les éléments en forme de cadre comportent des évidements (12) qui sont dirigés vers le réceptacle (30), et que les moyens de fixation sont des saillies, chevilles, crochets (22) ou analogues, qui quand le réceptacle (30) et le module solaire sont assemblés passent en-dessous de l'évidement (12) dans l'élément en forme de cadre (10), latéralement et/ou au niveau de ses extrémités.

7. Fixation selon la revendication 6, **caractérisée en ce que** les moyens de fixation sont des pattes (21) en un matériau élastique, comportant des languettes coudées (22).

8. Fixation selon la revendication 7, **caractérisée en ce que** les moyens de fixation (20) sont des clips agissant des deux côtés, dans le cas desquels, à partir d'une âme transversale (23), s'étendent l'une vers le haut et l'autre vers le bas deux âmes longitudinales (21), aux extrémités desquelles sont disposées des lames de serrage (22), en forme de V et dirigées vers l'âme transversale, en un matériau élastique, lames qui se terminent à une distance au-dessus de l'âme transversale (23) qui pour l'essentiel correspond à l'épaisseur des âmes latérales (13, 34) des évidements du réceptacle (30) ou de l'élément en forme de cadre (10), où les lames de serrage passent en arrière des âmes latérales (13, 33) des évidements (12, 33) du réceptacle et de l'élément en forme de cadre quand ils sont assemblés, et les assemblent l'une à l'autre.

9. Fixation selon la revendication 8, **caractérisée en ce que** l'âme transversale (23) comporte, en plus des âmes longitudinales (21), des surélévations qui pour l'essentiel correspondent à la largeur des évidements (12, 31) du réceptacle ou de l'élément en forme de cadre entre les âmes (13, 34), et les remplissent quand le réceptacle et l'élément en forme de cadre sont assemblés.

10. Fixation selon l'une des revendications 5 à 9, **caractérisée en ce que** le matériau élastique est un métal ou un alliage métallique.

11. Fixation selon l'une des revendications 5 à 9, **caractérisée en ce que** le matériau élastique est un plastique.

12. Fixation selon la revendication 1 ou 2, **caractérisée en ce que** les moyens de fixation sont constitués d'un élastomère.

13. Fixation selon la revendication 1 ou 2, **caractérisée en ce que** le réceptacle ou l'élément en forme de cadre comporte des évidements latéraux pour le démontage des moyens de fixation.
